# EUROPÄISCHE PATENTSCHRIFT

(11) **EP 0 910 754 B1**
(45) Veröffentlichungstag und Bekanntmachung des Hinweises auf die Patenterteilung: **03.12.2003**
(21) Anmeldenummer: 97932790.5
(22) Anmeldetag: 09.07.1997
(51) Int. Cl.: F16D 65/16, F16D 65/14

(54) **AKTUATORENBAUGRUPPE FÜR EINE FAHRZEUGBREMSE UND FAHRZEUGBREMSE MIT EINER DERARTIGEN AKTUATORENBAUGRUPPE**
ACTUATOR ASSEMBLY FOR A VEHICLE BRAKE; VEHICLE BRAKE WITH SUCH AN ACTUATOR ASSEMBLY
ENSEMBLE ACTIONNEUR POUR FREIN DE VEHICULE ET FREIN DE VEHICULE DOTE DUDIT ENSEMBLE ACTIONNEUR

(30) Priorität: 09.07.1996 DE 19627646
(43) Veröffentlichungstag der Anmeldung: 28.04.1999
(73) Patentinhaber: Lucas Industries Limited, West Midlands B90 4LA (GB)
(72) Erfinder: MOHR, Kurt, D-56283 Halsenbach (DE); MÜLLER, Frank, Martin, D-66871 Konken (DE)
(74) Vertreter: Schmidt, Steffen J., Dipl.-Ing.
(86) Internationale Anmeldenummer: EP9703627
(87) Internationale Veröffentlichungsnummer: WO98001682

(56) Entgegenhaltungen:
- DE-A- 2 618 966
- DE-A- 3 325 776
- US-A- 2 038 707
- US-A- 3 809 191
- US-A- 4 681 194
- US-A- 5 348 123
- US-A- 5 531 298
- PATENT ABSTRACTS OF JAPAN vol. 016, no. 428 (M-1307), 8.September 1992 & JP 04 146866 A (TOYOTA MOTOR), 20.Mai 1992,
- PATENT ABSTRACTS OF JAPAN vol. 011, no. 392 (M-653), 22.Dezember 1987 & JP 62 159819 A (NIPPON ELECTRIC ET AL.), 15.Juli 1987,

## Beschreibung

Die Erfindung betrifft eine Aktuatorenbaugruppe für eine Fahrzeugbremse sowie Fahrzeugbremse mit einer derartigen Aktuatorenbaugruppe.

Im KFZ-Bremsenbereich gibt es Bestrebungen, weg zu kommen von hydraulisch betätigten Zylinder/Kolbenanordnungen, und elektrisch betätigte Fahrzeugbremsen (Brake-by-wire) zu realisieren.

Üblicherweise ist bei jedem Kraftfahrzeug jedes Fahrzeugrad mit einer Bremseinheit versehen, die aus einer Scheiben- oder Trommelbremse sowie einem Bremskolben gebildet ist. Der Bremskolben wirkt hydraulisch oder pneumatisch auf die Scheiben- oder Trommelbremse. Entweder ist jedem Bremskolben ein einzelner Verstärker zugeordnet oder alle Bremskolben werden von einem gemeinsamen Bremskraftverstärker gesteuert. Über eine elektronische Steuerung wird das Verhalten eines oder mehrerer Fahrzeugräder in Bezug auf dessen Verzögerung bzw. Beschleunigung überwacht. Darüber hinaus werden weitere Parameter des Bremsvorganges, z.B. der Bremspedalbetätigungsweg, die Bremspedalbetätigungsgeschwindigkeit, die Bremspedalbetätigungskraft erfaßt und ausgewertet. Die elektronische Steuerung bestimmt aus diesen (und ggf. weiteren) Daten eine notwendige Bremskraftunterstützung und aktiviert den Bremskraftverstärker der jeweiligen Bremse oder moduliert die für alle Bremseinheiten zur Verfügung stehende Bremskraft des gemeinsamen Bremskraftverstärkers, worauf der durch die Pedalbetätigungskraft allein aufgebrachte hydraulische Bremszylinderdruck entsprechend verstärkt wird.

Alle derartigen bekannten Bremsanlagen haben aus Sicherheitsgründen neben einer elektronischen Betätigung eine direkte hydraulische Verbindung des pedalbetätigten Hauptbremszylinder zu den Bremskolben, um bei einem Ausfall der Elektronik nach wie vor die Bremse betätigen zu können.

Aus der DE 35 45 800 A1 ist eine Steuervorrichtung für Fahrzeugbremsen bekannt, bei der in dem Bremssattel eines jeden Rades eines Kraftfahrzeuges ein Radzylinder und ein Bremszylinder angeordnet sind. Eine piezoelektrische Betätigungsvorrichtung ist in dem Bremssattel derart angeordnet, daß sie mit dem Radzylinder in Verbindung steht. Wenn die peizoelektrische Betätigungsvorrichtung unter elektrische Spannung gesetzt wird, verschiebt sich ein Stempel in einer Buchse und verändert das Volumen des Hydraulikfluids in dem Radzylinder. Von einem Hauptzylinder wird Bremsflüssigkeit über eine Fluidkanal in dem Bremssattel dem Radzylinder zugeführt, wobei dieser Fluidkanal mit Hilfe eines Steuerventils geöffnet und geschlossen werden kann. Bei hohem Druck in dem Bremszylinder dehnt sich die piezoelektrische Betätigungsvorrichtung aus und das Steuerventil schließt. Anschließend wird die elektrische Spannung an der piezoelektrischen Betätigungsvorrichtung gesenkt, wodurch der Druck in dem Radzylinder gesenkt wird. Der in der Buchse geführte Stempel muß fluiddicht und reibungsarm gelagert sein, um eine verzögerungsarme Betätigung des Bremskolbens zu ermöglichen. Dies verursacht hohe Kosten bei der Herstellung und bedeutet eine aufwendige Montage.

Aus der DE 36 00 733 A1 ist eine ähnliche Steuervorrichtung für Fahrzeugbremsen bekannt, bei der innerhalb des Radzylinders ein Bremskolben angeordnet ist, in dessen Innerem eine piezoelektrische Kolbenvorrichtung vorgesehen ist. Hierbei wird der Bremskolben (zusammen mit der piezoelektrischen Kolbenvorrichtung) durch Hydraulikfluid durch einen Hauptbremszylinder zu einer Zustellbewegung der Bremse veranlaßt. Dabei wandert der Bremskolben zusammen mit der piezoelektrichen Kolbenvorrichtung unter der Einwirkung des Hydraulikfluids in dem Radzylinder. Zusätzlich zu der hydraulisch verursachten Zustellbewegung kann die piezoelektrische Kolbenvorrichtung aktiviert werden, die direkt auf einen Bremsbelag wirkt. Auch bei dieser Anordnung ist die Führung und Lagerung der piezoelektrischen Kolbenvorrichtung in dem Bremskolben hinsichtlich der fluiddichten Abdichtung und der verschleißarmen und trägheitsarmen Führung und Lagerung kritisch.

Problematisch bei elektrisch betätigten Bremsen ist jedoch die Tatsache, dass die geforderte Kraft-Weg-Kennlinie (ansteigende Kraft bei zunehmender Zustellbewegung) der auf das Reibelement wirkenden Kraft nicht durch die bekannten elektrisch betätigbaren Aktuatoren bereitgestellt wird.

Die aus der DE 35 45 800 A1 bekannte piezoelektrische Betätigungseinrichtung zeigt eine nur sehr eingeschränkt funktionsfähige Anordnung, weil der durch das Piezoelement zurücklegbare maximale Weg (und damit das Verdrängungsvolumen des Hydraulikfluides) viel zu gering ist. Außerdem gibt ein Piezoelement bei maximaler Auslenkung nur eine minimale Kraft ab, hat also eine Kennlinie mit entgegengesetztem Verlauf wie gewünschte Kraft-Weg-Kennlinie.

Die DE 26 18 966 A1 offenbart eine mechanische Handbremseinrichtung für hydraulisch betätigbare Sattel-Scheibenbremsen. Die Handbremseinrichtung umfaßt einen Hebel, der über eine drehbare Welle mit einem als Kniehebel wirkenden Druckbolzen zusammenwirkt. Der Hebel erstreckt sich in ein Sattelgehäuse und stützt sich schwenkbar an einem Stützkolben ab, der an einem durch Drehung der Welle betätigbaren Druckkolben anliegt. Der Druckbolzen stützt sich sowohl in einer exzentrischen Ausnehmung der Welle als auch an einem gehäuserückseitig befindlichen Lager ab.

Die DE 33 25 776 A1 offenbart eine Auflaufbremseinrichtung für Anhänger mit einer Zuspannvorrichtung, die aus zwei miteinander gelenkig verbundenen Hebeln und einem Stützhebel besteht. An einem Hebel ist ein Zuspannocken befestigt, der mit einem Bolzen zusammenwirkt, welcher mit einem auf Bremsklötze einwirkenden Kolben verbunden ist. Der Stützhebel ist bei Vorwärtsfahrtrichtung an einem ortsfesten Widerlager abgestützt.

Die US 3 809 191 offenbart eine Aktuatorenbaugruppe für eine Fahrzeugbremse, die einen Elektromotor umfaßt, welcher mit der Eingangsseite eines Getriebes verbunden ist.

Die JP 4146866 offenbart eine Bremsvorrichtung mit einer piezoelektrischen Einrichtung zur Umwandlung einer Bremspedalbetätigungskraft in elektrische Energie.

Die US 5 531 298 offenbart eine Aktuatoreneinrichtung für eine Trommelbremse mit einem gelenkig mit einem Druckstab verbundenen Hebel. Über den Druckstab und ein Ende des Hebels wird bei einer Betätigung des Hebels eine Bewegung zweier Kolben bewirkt.

Die US 2 038 707 offenbart eine Trommelbremse mit zwei schwenkbar miteinander verbundenen Armen, die in ihrem Verbindungspunkt über ein Verbindungsglied und einem Kniehebel mit einem Zugkabel verbunden sind. Durch das Einleiten einer Zugkraft über das Zugkabel wird über die Arme eine Bremsbetätigungskraft ausgeübt.

Die JP 62159819 offenbart eine Bremsvorrichtung mit einem piezoelektrischen Aktuator, der auf eine Hebelanordnung, die einen rechten Winkel einschließt, eine Betätigungskraft aufbringt. Durch die Bewegung der Hebelanordnung wird eine Bremskraft erzeugt.

Der Erfindung liegt daher die Aufgabe zugrunde, eine elektrisch betätigbare Aktuatorenbaugruppe für eine Fahrzeugbremse bereitzustellen, die diese Nachteile nicht aufweist. Diese Aufgabe wird durch die in Anspruch 1 angegebene Aktuatorenbaugruppe gelöst. Vorteilhafte Ausgestaltungen sind Gegenstand von Unteransprüchen. Weitere Merkmale, Vorteile und Eigenschaften der Erfindung werden anhand der nachstehenden Beschreibung unter Bezugnahme auf die Zeichnungen erläutert.
Fig. 1a zeigt eine nicht zur Erfindung gehörende und auch nicht von den Patentansprüchen umfasste Kniehebelanordnung zur Betätigung einer Fahrzeugbremse in einer schematischen Darstellung einer ersten Ausführungsform.
Fig. 1b zeigt ein Diagramm der Eingangs- und Ausgangskräfte der Kniehebelanordnung gemäß Fig. 1a.
Fig. 2a zeigt eine nicht zur Erfindung gehörende und auch nicht von den Patentansprüchen umfasste Kniehebelanordnung zur Betätigung einer Fahrzeugbremse in einer schematischen Darstellung einer zweiten Ausführungsform.
Fig. 2b zeigt ein Diagramm der Eingangs- und Ausgangskräfte der Kniehebelanordnung gemäß Fig. 2a.
Fig. 3a zeigt eine erfindungsgemäße Kniehebelanordnung zur Betätigung einer Fahrzeugbremse in einer schematischen Darstellung einer dritten Ausführungsform.
Fig. 3b zeigt ein Diagramm der Eingangs- und Ausgangskräfte der Kniehebelanordnung gemäß Fig. 3a.
Fig. 4 zeigt eine Diagramm der Verhältnisse zwischen den Eingangshüben und den Ausgangshüben der Kniehebelanordnungen gemäß den Fig. 1a, 2a, 3a.
Fig. 5 zeigt eine nicht zur Erfindung gehörende und auch nicht von den Patentansprüchen umfasste Fahrzeugbremse mit einer erfindungsgemäßen Aktuatorenbaugruppe.
In Fig. 6 ist eine erste Ausführungsform einer erfindungsgemäßen Fahrzeugbremse in einer seitlichen teilweisen Schnittansicht gezeigt, mit einem Elektromotor als Aktuator, der eine Spindel antreibt, und einem Kniehebelgetriebe gemäß dem Prinzip der bevorzugten Ausführungsform nach Fig. 3a, 3b.
In Fig. 6a ist eine teilweise Schnittansicht der ersten Ausführungsform gemäß Fig. 6 längs der Linie IV-IV in der Fig. 6 gezeigt.
In Fig. 7 ist eine zweite Ausführungsform einer erfindungsgemäßen Fahrzeugbremse in einer seitlichen teilweisen Schnittansicht gezeigt, mit einem Elektromotor als Aktuator, der eine Spindel antreibt, und einem Kniehebelgetriebe gemäß dem Prinzip der bevorzugten Ausführungsform nach Fig. 3a, 3b.

In Fig. 7a ist eine teilweise Schnittansicht der zweiten Ausführungsform gemäß Fig. 7 längs der Linie IIV-IIV in der Fig. 7 gezeigt.

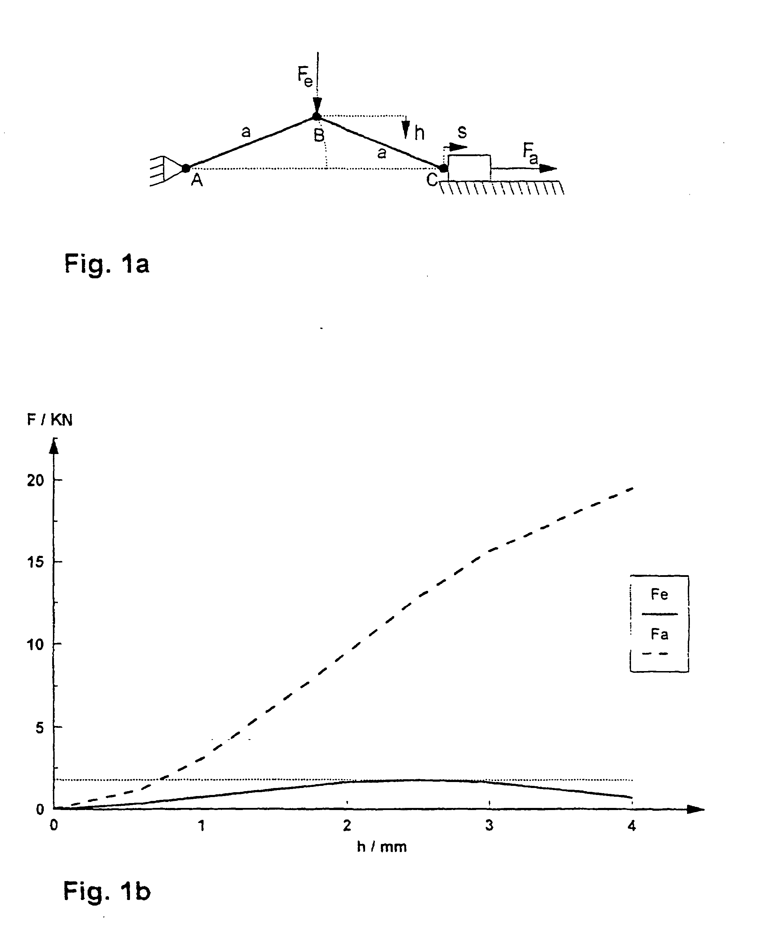

In Fig. 1a ist ein gleichschenkliges Kniehebelgetriebe dargestellt, das aus zwei gleichen Hebeln AB, CB der Länge a, und drei Gelenkpunkten A, B und C besteht. Dabei ist der Gelenkpunkt A in einem Festlager und der Gelenkpunkt C in einem Loslager aufgenommen, während in dem Gelenkpunkt B die beiden Hebel miteinander verbunden sind.

Wird in dem Gelenkpunkt B eine Eingangskraft Fₑ in vertikaler Richtung eingeleitet, so resultiert hieraus in dem Gelenkpukt C eine Ausgangskraft Fₐ in horizontaler Richtung. Dabei bewegt sich der Gelenkpukt B um einen Eingangsweg h vertikal nach unten, während sich Gelenkpunkt C um einen Ausgangsweg s horizontal nach rechts bewegt.

In Fig. 1b sind in einem Kraft-Weg-Diagramm für das in Fig. 1a betrachtete Kniehebelgetriebe die Eingangskraft Fₑ sowie die Ausgangskraft Fₐ jeweils in Abhängigkeit von dem Eingangsweg h aufgetragen. Dabei entspricht der Verlauf der Ausgangskraft Fₐ dem an die Reibungselemente einer Fahrzeugbremse gestellten Anforderungsprofil, gemäß dem bei einem Ausgangsweg s von ca. 0.7 mm eine Ausgangskraft Fₐ von ca. 20 KN aufzubringen ist. Um dies zu erreichen muß maximal ein Eingangsweg h von ca. 4 mm zurückgelegt werden, wobei über den Eingangsweg eine maximale Eingangskraft Fₑ von ca. 2 KN aufzubringen ist.

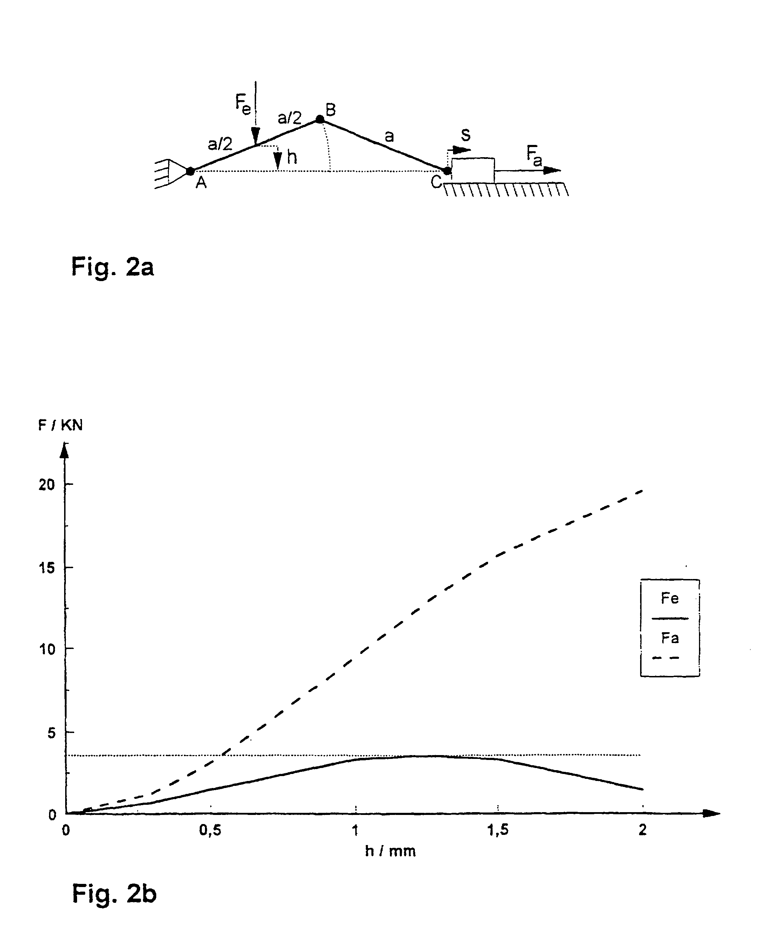

Bei dem in Fig. 2a dargestellten Kniehebelgetriebe erfolgt gegenüber dem in Fig. 1a darstellten Kniehebelgetriebe die Einleitung der Eingangskraft Fₑ unmittelbar über den Hebel AB, wobei sich der Krafteinleitungspunkt in der Mitte (bei a/2) des Hebels AB befindet.

Wie aus dem zugehörigen Kraft-Weg-Diagramm in Fig. 2b, dem gleichfalls das für eine Fahrzeugbremse typische Anforderungsprofil von einer Ausgangskraft von ca. 20 KN bei einem Ausgangsweg s von ca. 0,7 mm zugrundeliegt, hervorgeht, ist hierbei nur ein Eingangsweg h von ca. 2 mm zurückzulegen, allerdings ist eine maximale Eingangskraft Fₑ von ca. 4 KN aufzubringen.

Daher kommt eine derartige Auslegung des Kniehebelgetriebes der Verwendung eines aus Piezoelementen aufgebauten Aktuators tendenzmäßig entgegen, der zwar eine sehr hohe Kraft (Eingangskraft Fₑ), allerdings nur einen sehr kleinen Hub (Eingangsweg h) ausüben kann. Diese Tendenz läßt sich durch weitere Verlagerung des Krafteinleitungspunktes in Richtung auf den Gelenkpunkt A entsprechend verstärken. Würde sich beispielsweise der Krafteinleitungspunkt um a/4 vom Gelenkpunkt A entfernt befinden, so wäre eine Eingangskraft Fₑ von ca. 8 KN aufzubringen und ein Eingangsweg h von ca. 1 mm zurückzulegen, um dem zuvor genannten Anforderungsprofil gerecht zu werden.

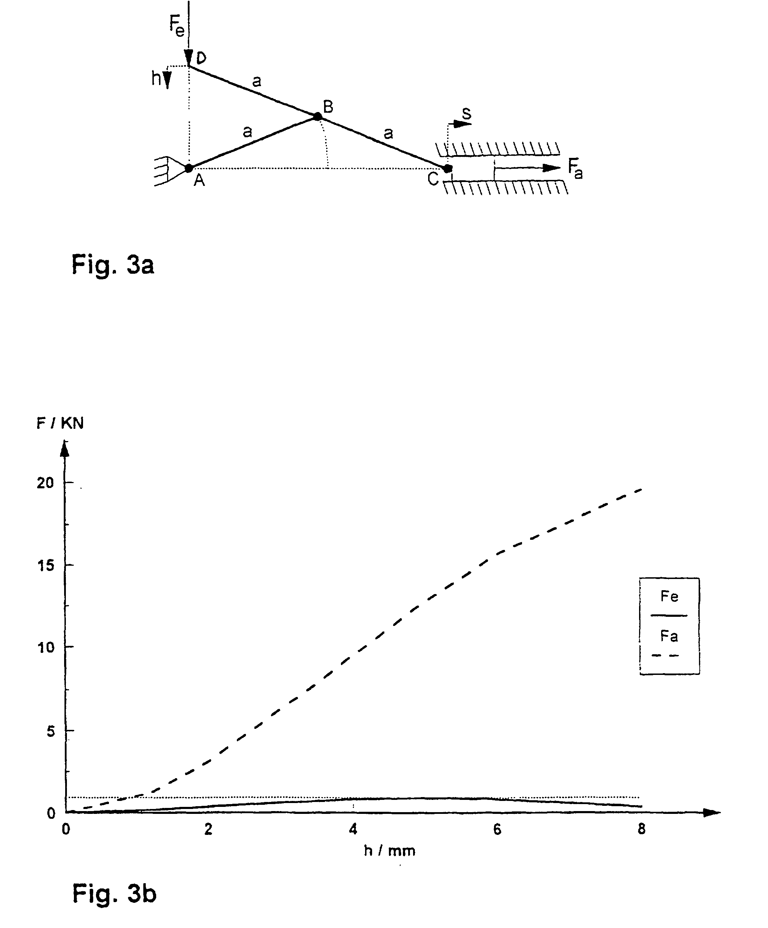

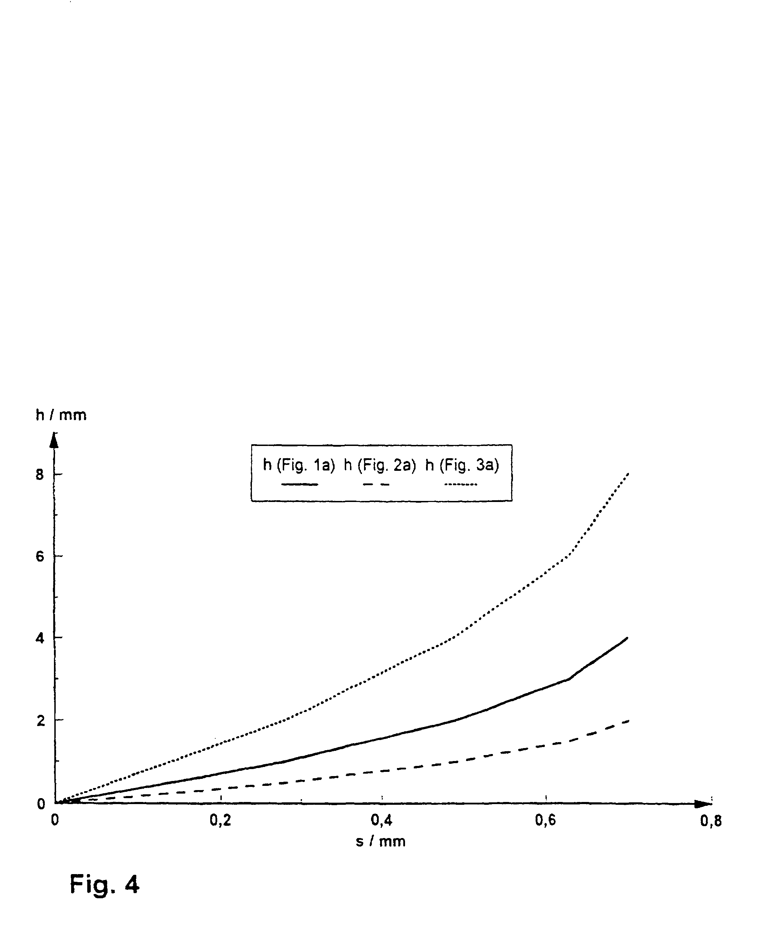

Das in Fig. 3a dargestellte Kniehebelgetriebe weist einen um die Länge a auf die Länge 2 a verlängerten Hebel CBD auf, wobei die Eingangskraft Fₑ an dem freien Ende dieses Hebels im Punkt D eingeleitet wird. Der Gelenkpunkt B bleibt der Anlenkungspunkt für den Arm AB.

Aus dem zugehörigen in Fig. 3b gezeigten Kraft-Weg-Diagramm ist ersichtlich, daß eine derartige Auslegung für das vorgegebene Anforderungsprofil von ca. 20 KN Ausgangskraft Fₐ bei ca. 0.7 mm Ausgangsweg s lediglich eine maximale Eingangskraft Fₑ von ca. 1 KN erfordert. Allerdings ist hierbei ein Eingangsweg h von ca. 8 mm zurückzulegen, so daß bei einer derartigen Anordnung einer Elektromagnetanordnung oder einem Elektromotor, der eine Spindel zur Umsetzung seiner Rotations- in eine Translationsbewegung antreibt, als Aktuator der Vorzug zu geben ist.

Als besonderer Vorteil des in Fig. 3a betrachteten Kniehebelgetriebes erweist sich, daß sich der Krafteinleitungspunkt für die Eingangskraft Fₑ in der gleichen Richtung wie der Eingangsweg h auf einer vertikalen Linie auf dem Punkt A (nach unten) bewegt. Dem gegenüber folgt der Krafteinleitungspunkt bei den in Fig. 1a und Fig. 2a betrachteten Kniehebelgetrieben einer kreisbogenförmigen Linie um den Gelenkpunkt A. Dadurch erfordert die praktische Umsetzung des Kniehebelgetriebes nach Fig. 3a einen geringeren konstruktiven Aufwand als die Kniehebelgetriebe nach Fig. 1a und 2a.

Vorteilhaft bei der Ausführungsform nach Fig. 3a ist auch, daß in dem Gelenkpunkt C nahezu keine Kräfte in vertikaler Richtung, sondern überwiegend nur die Ausgangskraft Fₐ in waagerechter Richtung wirksam ist. Dadurch müssen in der Lagerung des Gelenkpunktes C nahezu keine Reaktionskräfte aufgenommen werden, so daß eine einfache Führung ausreichend ist, wodurch sich ebenfalls die konstruktive Ausgestaltung vereinfacht.

Als charakteristisch für die Geometrie der in Fig. 1a, 2a sowie 3a betrachteten Kniehebelgetriebe erweisen sich Hebellängen a von ca. 30 mm und Winkel zwischen den Hebeln AB bzw. CB und der gedachten Linie AC bzw. CA von ca. 10 Grad. Damit ist eine Integration in den bei einer Fahrzeugbremse, sowohl Scheiben- als auch Trommelbremse, zur Verfügung stehenden Einbauraum ohne weiteres möglich. Aufgrund des verlängerten Hebels benötigt das Kniehebelgetriebe nach Fig. 3a etwas mehr Einbauraum als die Kniehebelgetriebe nach Fig. 1a und 2a, so daß dieses sich insbesondere für die Integration in einer Trommelbremse eignet, die mehr Einbauraum als eine Scheibenbremse zur Verfügung stellt.

Zu erwähnen ist noch, daß sich bei Verwendung von Hebeln mit unterschiedlichen Längen keine entscheidenden Veränderungen ergeben. Allerdings bewirkt bei einem gleichschenkligen Kniehebelgetriebe eine Verkürzung der Länge a beider Hebel AB, CB eine Erhöhung der Eingangskraft Fₑ bei einer Verringerung des Eingangsweges s, s0 daß sich eine Tendenz zu dem in Fig. 2b dargestellten Verhalten einstellt, wogegen eine Verlängerung der Länge a beider Hebel AB, CB eine Verringerung der Eingangskraft Fₑ bei einer Erhöhung des Eingangsweges s bewirkt, so daß sich eine Tendenz zu dem in Fig. 3b dargestellten Verhalten einstellt.

In Fig. 4 ist für die Kniehebelgetriebe nach Fig. 1a, 2a sowie 3a in einem Weg-Weg-Diagramm der Eingangsweg h in Abhängigkeit von dem Ausgangsweg s dargestellt. Hieraus geht wie bereits erläutert hervor, daß bei einem geforderten Ausgangsweg h von ca. 0,7 mm bei dem Kniehebelgetriebe gemäß Fig. 1a ein maximaler Eingangsweg von ca. 4 mm, bei dem Kniehebelgetriebe gemäß Fig. 2a ein maximaler Eingangsweg h von ca. 2 mm und bei dem Kniehebelgetriebe gemäß Fig. 3a ein maximaler Eingangsweg h von ca. 8 mm ausübbar sein muß.

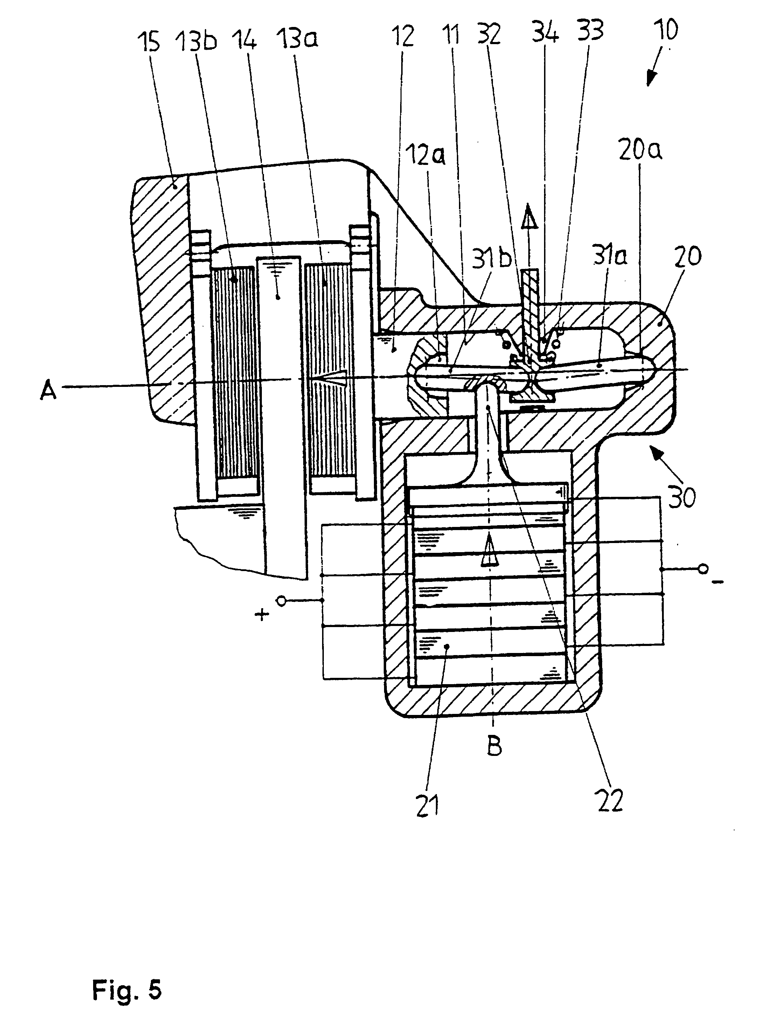

Fig. 5 zeigt ein Ausführungsbeispiel für die Verwendung eines Kniehebelgetriebes als Kraftübertragungsglied bei einer als Scheibenbremse ausgebildeten Fahrzeugbremse. Die Bremse 10 weist ein Gehäuse 20 mit einem Bremszylinder 11 auf, in dem axial zur Achse A ein Bremskolben 12 gleitend aufgenommen ist. Der Bremskolben 12 wirkt an seinem freien Ende auf einen ersten Bremsbelag 13a, der zusammen mit einem zweiten Bremsbelag 13b auf zwei gegenüberliegenden Flächen einer als Reibungselement ausgebildeten Bremsscheibe 14 wirkt. Eine Radbremszange 15 ist mit dem Gehäuse 20 einstückig verbunden und übergreift die Bremsscheibe 14 um den zweiten Bremsbelag 13b zu haltern.

Als Aktuator dient ein Linearmotor, der in Form einer piezoelektrischen Stelleinheit 21 ausgebildet ist. Die piezoelektrische Stelleinheit 21 ist in dem Gehäuse 20 derart angeordnet, daß bei Betätigung der piezoelektrischen Stelleinheit 21 eine Linearbewegung axial zu der Achse B erzeugt wird, um einen Stößel 22 zu betätigen.

Die Achse A, in der die Betätigung des Bremskolbens 12 erfolgt, und die Achse B, in der die Betätigung des Stößels 22 durch das piezoelektrische Stellelement 21 erfolgt, sind senkrecht zueinander angeordnet. Zur Umsetzung der Betätigung des Stößels 22 auf die Betätigung des Bremskolbens 12 dient ein als Kniehebelgetriebe 30 ausgestaltetes Kraftübertragungsglied, das in dem Bremszylinder 11 angeordnet ist.

Das Kniehebelgetriebe 30 besteht aus zwei Hebeln 31a, 31b. Zur Festlagerung stützt sich der erste Hebel 31a in einer Aufnahme 20a des Gehäuses 20 ab, während der zweite Hebel 31b zur Loslagerung in einer Aufnahme 12b des Bremskolbens 12 aufliegt. Die gelenkige Verbindung zwischen den Hebeln 31a, 31b stellt ein Gelenkstück 32 her. Eine Betätigung des Kniehebelgetriebes erfolgt über den Stößel 22, der auf den zweiten Hebel 31b einwirkt, so daß der Bremskolben 12 zur Bremsbetätigung axial zur Achse A bewegt wird. Die über den Stößel 22 eingeleitete Eingangskraft Fₑ wirkt auf den zweiten Hebel 31b, da als Aktuator ein piezoelektrisches Stellelement 21 dient, für das die anhand von Fig. 2a und 2b erläuterte Auslegung des Kniehebelgetriebes 30 am geeignetsten ist.

Weiterhin besteht die Möglichkeit, zusätzlich über das Gelenkstück 32 eine Eingangskraft in das Kniehebelgetriebe 30 einzuleiten, wobei die anhand von Fig. 1a und 1b dargelegte Auslegung zugrunde liegt. Dies kann beispielsweise dazu dienen, der Scheibenbremse auch die Funktion der Feststellbremse zu übertragen.

Eine Federanordnung 33, die einer Betätigung des Gelenkstücks 32 entgegenwirkt, stellt bei unbetätigtem piezoelektrischen Stellelement 21 das Kniehebelgetriebe 30 in seine Grundstellung zurück, so daß auf die Bremsscheibe 14 keine Reibungskräfte ausgeübt werden.

Ein in dem Bremszylinder 11 angeordneter Anschlag 34 stellt sicher, daß die Hebel 31a, 31b nicht eine zur Achse A axiale Lage oder sogar eine Lage darüber hinaus einnehmen können, da bei einer zur Achse A axialen Lage genau der Kraftumkehrpunkt des Kniehebelgetriebes 30 erreicht wird.

In Abwandlung der Ausführungsform von Fig. 5 kann der Krafteinleitungspunkt des Stößels 22 von dem Hebel 31b in den Hebel 31a verlegt werden. Dies hat den Vorteil, daß die seitliche Verschiebung des Krafteinleitungspunktes entlang der Achse A halbiert ist. Nachteilig ist hierbei, daß der Bauraum größer wird, weil das piezoelektrische Stellelement 21 weiter von der Bremsscheibe 14 anzuordnen ist. Um dies zu vermeiden kann auch die Anordnung des Festlagers und des Loslagers vertauscht werden, so daß die Betätigungskräfte nicht über den Bremsbelag 13a, sondern über den Bremsbelag 13b auf die Bremsscheibe 14 ausgeübt werden.

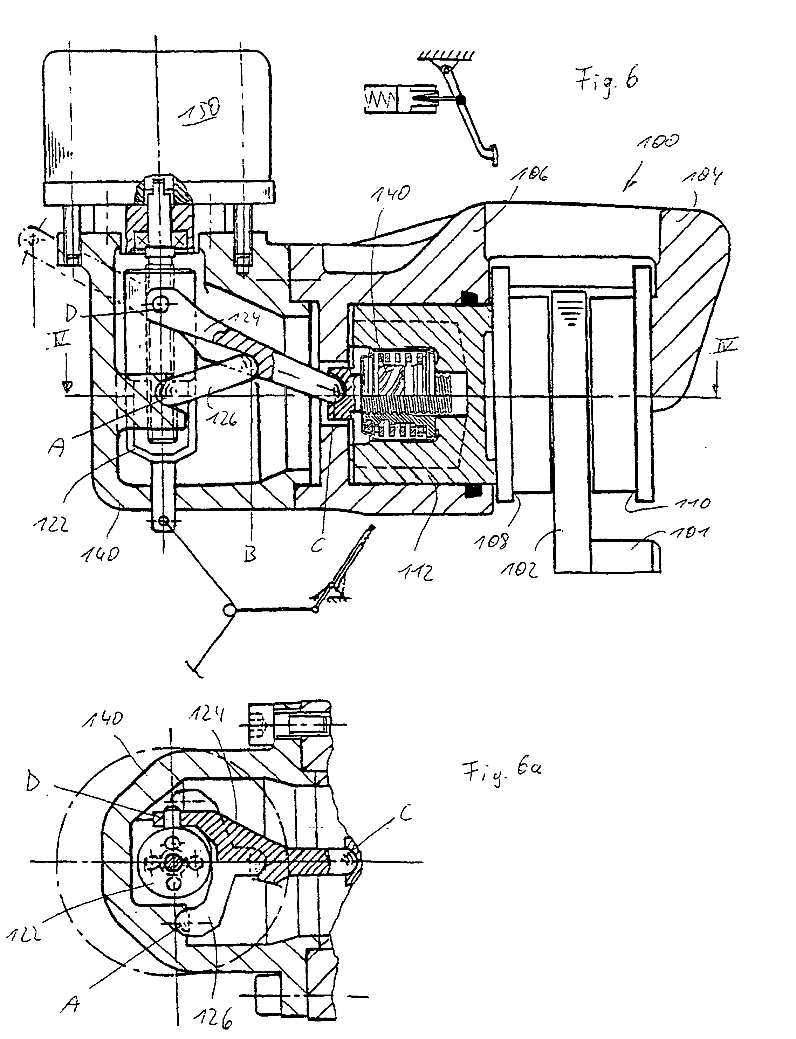

In Fig. 6 ist eine Fahrzeugbremse gezeigt, bei der als Aktuator ein Elektromotor vorgesehen ist, der eine Spindel zur Umsetzung seiner Rotations- in eine Translationsbewegung antreibt. Das Kniehebelgetriebe ist dabei gemäß der bevorzugten Ausführungsform nach Fig. 3a, 3b ausgebildet.

Bei der in Fig. 6 gezeigten Ausführung handelt es sich um eine sogenannte "trockene" Ausführung, die ohne Hydraulikfluid auskommt.

Eine Schwimmsattelanordnung 100 umgreift dabei eine an einem angedeuteten Achsstummel 101 drehfest angeordnete Bremsscheibe 102 radial mit zwei Armen 104, 106. An jedem der Arme 104, 106 ist jeweils ein einer Reibfläche der Bremsscheibe 102 zugewandter Reibbelag 108, 110 gehaltert. Der näher zur Fahrzeugmitte hin befindliche Reibbelag 108 ist in zur Bremsscheibe 102 koaxialer Richtung verschiebbar gelagert und ist durch einen Bremskolben 112 betätigbar. Dabei ist die Anordnung derart getroffen, daß eine Verschiebung des näher zur Fahrzeugmitte hin befindlichen Reibbelages 108 in Richtung auf den Reibbelag 102 auch zu einem Heranziehen des weiter von der Fahrzeugmitte weg befindlichen Reibbelages 110 an die Bremsscheibe 102 bewirkt, sobald der innere Reibbelag 108 an der Bremsscheibe 102 anliegt.

Im Innern des Bremskolbens 112 ist hierbei eine an sich bekannte Nachstelleinheit 114 angeordnet, um den Verschleiß der Reibbeläge 108, 10 sowie der Bremsscheibe 102 durch Einstellung des Luftspaltes zwischen jedem Reibbelag 108, 110 und der Bremsscheibe 102 zu kompensieren.

Die axiale Verschiebung des Bremskolbens 112 wird durch eine Kniehebelanordnung 120 bewirkt, die im Prinzip der Anordnung aus der Fig. 3a entspricht. Dem längeren Arm D-B-C aus Fig. 3a entspricht in Fig. 6 der zwischen dem Bremskolben 112 und einer Innen-Gewindehülse 122 beidseitig gelenkig gelagerten Arm 124. Im Punkt B des längeren Armes 124 greift der dem kürzeren Arm A-B aus Fig. 3 entsprechende Arm 126 an, der ebenfalls an beiden Enden gelenkig gelagert ist. Im Detail ist die Anordnung so getroffen, daß der längere Arm 124 an seinem Ende C halb-kugelig gestaltet ist und an dem Bremskolben 112 in eine entsprechend geformte Kugelpfanne eingreift. An seinem anderen Ende D ist der längere Arm 124 gabelförmig geteilt und umgreift die Innen-Gewindehülse 122 teilweise. Über eine Drehzapfenverbindung 130, 132 an den beiden Enden des gabelförmigen Endes des längeren Armes 124 ist dieser an der Innen-Gewindehülse 122 angelenkt. Der kürzere Arm 126 ist ebenfalls an seinem Ende A gabelförmig geteilt und umgreift die Innen-Gewindehülse 122. Die beiden Enden des gabelförmigen Endes A des kürzeren Armes 126 sind halb-kugelig gestaltet und stützen sich jeweils in einer entsprechend geformten Kugelpfanne im Gehäuse 140 ab.

In der Innen-Gewindehülse 122 ist eine Gewindestange 142 aufgenommen, die mit der Ausgangswelle eines an dem Gehäuse 140 befestigten Elektromotors 150 drehfest verbunden ist. An der dem Elektromotor 150 abgewandten Seite der Innen-Gewindehülse 122 ist diese mitels einer Schraubenfeder 146 in axialer Verlängerung der Gewindestange 142 gegen das Gehäuse 140 abgestützt. Wenn der Elektromotor 150 angesteuert wird, dreht sich die Gewindestange 142, was zur Folge hat, daß die Innen-Gewindehülse 122 sich je nach Drehrichtung des Elektromotor 150 entlang der Gewindestange 142 auf- oder abbewegt und dabei das Ende A des längeren Armes 124 mitnimmt. Dies hat zur Folge, daß der Bremskolben 112 hin- oder herverschoben wird, so daß der Reibbelag 108 auf die Bremsscheibe 102 zu bzw. von dieser wegbewegt wird.

Weiterhin werden in Fig. 6 auch zwei Möglichkeiten gezeigt, die Funktion der Feststellbremse auf die Scheibenbremse zu übertragen. Zum einen wirkt ein mit einer Betätigungseinrichtung (Pedal, Bremshebel) in Verbindung stehender Seilzug auf die verdrehgesicherte, aber axial zur Welle des Elektromotors 150 durch eine Keilnuten-Steckverbindung verschiebbare Innen-Gewindehülse 122. Zum anderen (gestrichelt angedeutet) ist der längere Arm 124 des Kniehebelgetriebes in der Weise verlängert, daß er durch ein Langloch aus dem Gehäuse 140 der Fahrzeugbremse herausragt und somit über einen Seilzug betätigt werden kann. Insbesondere die Ausführungsform mit dem verlängerten Arm 124 ermöglicht es, über die Betätigungseinrichtung derart größe Bremskräfte aufzubauen, daß sogar die gesetzlichen Anforderungen für eine Notbremsung erfüllt werden.

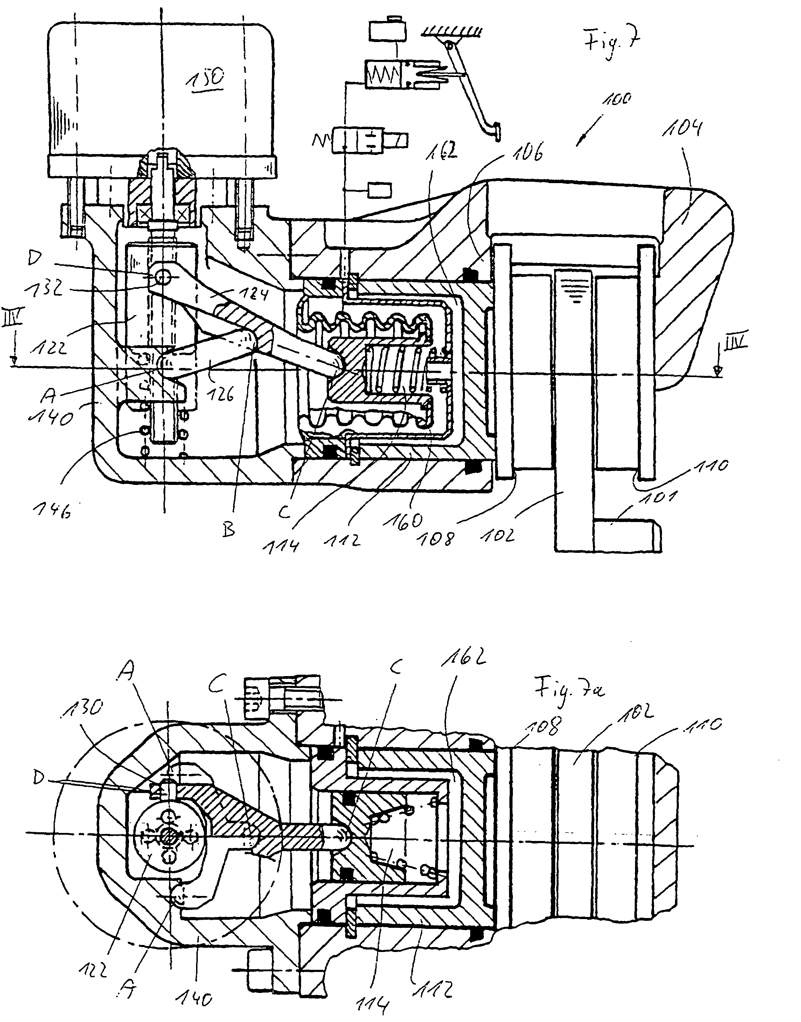

In Fig. 7 sind gegenüber Fig. 6 gleiche oder gleichwirkende Bauteile mit gleichen Bezugszeichen versehen und nicht nochmals erläutert.

Gegenüber Fig. 6 weist Fig. 7 eine Hydraulikkammer 162 zur Betätigung des Bremskolbens auf. Dabei betätigt das Kniehebelgetriebe ausgangsseitig einen in dem Bremskolben angeordneten inneren Kolben, der zur Erzeugung eines Bremsdrucks das Volumen der Hydraulikkammer 162 verkleinert. Die Vorteile dieser Ausführung bestehen darin, daß aufgrund der zusätzlichen hydraulischen Übersetzungsstufe der Elektromotor, der Spindelantrieb sowie das Kniehebelgetriebe schwächer ausgelegt werden können. Damit ist diese Lösung günstiger in Bezug auf Bauraum und Kosten. Außerdem kann die Nachstellung bei Verschleiß der Bremsscheibe 102 bzw. der Reibbeläge 108, 110 auf einfache Weise gemäß dem bekannten "Rollback"-Prinzip durch die Kontraktion des Gummibalges 160 erfolgen. Schließlich ist auch eine als "Push-Through" bezeichnete hydraulische Notbetätigung über das Bremspedal in herkömmlicher Weise, beispielsweise bei Ausfall der elektrischen Spannungsversorgung, möglich.

## Patentansprüche

1. Aktuatorenbaugruppe für eine elektromechanische Fahrzeugbremse mit einem Antrieb (150), der mit einer Eingangsseite eines Getriebes verbunden ist, wobei eine Ausgangsseite des Getriebes zur Betätigung wenigstens eines Reibelementes (108, 110) der Fahrzeugbremse eingerichtet ist, und das Getriebe eine Kniehebelanordnung mit zwei Armen (124, 126) ist, wobei ein erster Arm (126) der Kniehebelanordnung in einem Festlager (A) in einem Gehäuse (140) abgestützt ist und ein zweiter Arm (124) über ein Loslager (C) mit einem axial verschiebbaren Reibbelag (108) verbunden ist, **dadurch kennzeichnet, dass** der Antrieb (150) ein elektrischer Antrieb ist, die zwei Arme der Kniehebelanordnung in der Ruhestellung einen Winkel von circa 160 Grad einschließen und der zweite Arm (124) gerade gestreckt über ein die beiden Arme (124, 126) miteinander verbindendes Gelenk (B) hinaus ragt, wobei der Antrieb Betätigungskräfte im Bereich von dessen freiem Ende in die Kniehebelanordnung in Richtung des Festlagers (A) des ersten Arms einleitet.

2. Aktuatorenbaugruppe nach Anspruch 1, **dadurch gekennzeichnet, dass** der Antrieb eine piezoelektrische Stelleinrichtung ist.

3. Aktuatorenbaugruppe nach Anspruch 1, **dadurch gekennzeichnet, dass** der Antrieb ein Elektromotor mit einem Spindeltrieb ist.

4. Aktuatorenbaugruppe nach Anspruch 1, **dadurch gekennzeichnet, dass** der zweite Arm (124) um die Länge des ersten Armes (126) über das die beiden Arme (124, 126) miteinander verbindende Gelenk (B) hinaus ragt.

5. Aktuatorenbaugruppe nach Anspruch 1, bei der in dem die beiden Arme (124, 126) verbindenden Gelenk (B) zusätzlich eine Zugbetätigung zur Arretierung der Reibbeläge in ihrer betätigten Stellung angreift.

6. Elektromechanische Fahrzeugbremse **gekennzeichnet durch** eine Aktuatorenbaugruppe nach einem oder mehreren der vorhergehenden Ansprüche.

7. Elektromechanische Fahrzeugbremse nach Anspruch 6, bei der die axiale Verschiebung des Bremskolbens (112) durch eine Kniehebelanordnung (120) bewirkt wird, die einen längeren Arm (D-B-C; 124) zwischen dem Bremskolben (112) und einer Innen-Gewindehülse (122) aufweist, der beidseitig gelenkig gelagert ist, und einen kürzeren Arm (A-B; 126), der an beiden Enden gelenkig gelagert ist und in einem Punkt (B) des längeren Armes (D-B-C; 124) angreift.

8. Elektromechanische Fahrzeugbremse nach Anspruch 7, wobei der längere Arm (D-B-C; 124) an seinem ersten Ende (C) halb-kugelig gestaltet ist und an dem Bremskolben (112) In eine entsprechend geformte Kugelpfanne eingreift, und an seinem zweiten Ende (D) der längere Arm (D-B-C; 124) gabelförmig geteilt ist und die Innen-Gewindehülse (122) teilweise umgreift.

9. Elektromechanische Fahrzeugbremse nach Anspruch 8, wobei Ober eine Drehzapfenverbindung (130, 132) an den beiden Enden des gabelförmigen Endes des längeren Armes (D-B-C; 124) dieser an der Innen-Gewindehülse (122) angelenkt ist.

10. Elektromechanische Fahrzeugbremse nach Anspruch 9, wobei der kürzere Arm (A-B; 126) an seinem ersten Ende (A) gabelförmig geteilt ist und die Innen-Gewindehülse (122) umgreift, und wobei die beiden Enden des gabelförmigen Endes (A) des kürzeren Armes (A-B; 126) halb-kugelig gestaltet sind und sich jewells in einer entsprechend geformten Kugelpfanne im Gehäuse (140) abstützen.

11. Elektromechanische Fahrzeugbremse nach Anspruch 7 bis 10, wobei in der Innen-Gewindehülse (122) eine Gewindestange (142) aufgenommen ist, die mit der Ausgangswelle eines an dem Gehäuse 140 befestigten Elektromotors (150) drehfest verbunden ist.

## Claims

1. An actuator assembly for an electromechanical vehicle brake, comprising a drive (150) that is connected with an input side of a transmission, wherein an output side of the transmission is adapted to actuate at least one friction element (108, 110) of the vehicle brake and the transmission is a knee lever arrangement with two arms (124, 126), with a first arm (126) of the knee lever arrangement being supported in a location bearing (A) in a housing (140) and a second arm (124) being connected with an axially movable friction lining (108) via a floating bearing (C),
**characterised in that** the drive (150) is an electric drive, the two arms of the knew lever arrangement define an angle of approximately 160 degrees in the rest position, and the second arm (124) in straight state projects beyond a joint (B) connecting the two arms (124, 126) with each other, with the drive introducing actuating forces in the area of the free end thereof into the knee lever arrangement in the direction of the location bearing (A) of the first arm.

2. The actuator assembly according to Claim 1, **characterised in that** the drive (21) is a piezoelectric pilot means.

3. The actuator assembly according to Claim 1, **characterised in that** the drive is an electric motor with a screw drive.

4. The actuator assembly according to Claim 1, **characterised in that** the second arm (124) projects by the length of the first arm (126) beyond the joint (B connecting the two arms (124, 126) with each other.

5. The actuator assembly according to Claim 1, wherein in the joint (B) connecting the two arms a Bowden transmission actuation acts additionally for arresting the friction linings in their actuated position.

6. An electromechanical vehicle brake, **characterised by** an actuator assembly according to one or several of the previous claims.

7. The electromechanical vehicle brake according to Claim 6, wherein the axial displacement of the brake piston (112) is effected by a knee lever arrangement (120) which comprises a longer arm (D-B-C; 124) between the brake piston (112) and a sleeve (122) with female thread, which is supported in an articulated manner at both ends, and a shorter arm (A-B; 126) which is supported in an articulated manner at both ends and acts in a point (B) of the longer arm (D-B-C; 124).

8. The electromechanical vehicle brake according to Claim 7, wherein the longer arm (D-B-C; 124) is designed semi-spherically at its first end (C) and engages at a correspondingly shaped ball socket at the brake piston (112), and at its second end (D) the longer arm 124 is split in a fork-shaped manner and partially envelops the sleeve (122) with female thread.

9. The electromechanical vehicle brake according to Claim 8, wherein the longer arm (D-B-C; 124) is hinged via a pivot connection (130, 132) at both ends of the fork-shaped end of said arm at the sleeve (122) with female thread.

10. The electromechanical vehicle brake according to Claim 9, wherein the shorter arm (A-B; 126) is split in a fork-shaped manner at its first end (A) and envelops the sleeve (122) with female thread, and wherein the two ends of the fork-shaped end (A) of the shorter arm (A-B; 126) are of a semi-spherical design and each rests in a correspondingly shaped ball socket in the housing (140).

11. The electromechanical vehicle brake according to claims 7 to 10, wherein a threaded rod (142) is accommodated in the sleeve (122) with female thread, which rod (142) is non-rotatably connected with the output shaft of an electric motor (150) attached to the housing 140.

## Revendications

1. Sous-groupe de commande pour un frein électromécanique de véhicule, comportant un dispositif moteur (150) relié à une entrée d'un mécanisme, une sortie du dispositif moteur étant agencée pour l'actionnement d'au moins un élément de friction (108, 110) du frein de véhicule et le mécanisme étant un dispositif à levier à genouillère comprenant deux bras (124, 126), un premier bras (126) du dispositif à levier à genouillère s'appuyant sur un palier fixe (A) situé dans un carter (140), et un second bras (124) étant relié par un palier mobile (C) à une garniture de friction (108) pouvant être déplacée axialement, **caractérisé en ce que** le dispositif moteur (150) est un dispositif moteur électrique, que les deux bras du dispositif à levier à genouillère renferment un angle de 160 degrés environ et que le second bras (124), en position droite allongée, dépasse une articulation (B) reliant les deux bras (124, 126) l'un à l'autre, le dispositif moteur introduisant, dans la région de son extrémité libre, des forces d'actionnement dans le dispositif à levier à genouillère en direction du palier fixe (A) du premier bras.

2. Sous-groupe de commande selon la revendication 1, **caractérisé en ce que** le dispositif moteur est un dispositif de réglage piézo-électrique.

3. Sous-groupe de commande selon la revendication 1, **caractérisé en ce que** le dispositif moteur est un moteur électrique comportant un entraînement à vis sans fin.

4. Sous-groupe de commande selon la revendication 1, **caractérisé en ce que** le second bras (124) dépasse l'articulation (B) reliant les deux bras (124, 126) de la longueur du premier bras (126).

5. Sous-groupe de commande selon la revendication 1, dans lequel dans l'articulation (B) reliant les deux bras (124, 126) un actionnement par traction est en outre appliqué pour le blocage des garnitures de friction dans leur position d'actionnement.

6. Frein électromagnétique de véhicule, **caractérisé par** un sous-groupe de commande selon l'une ou plusieurs des revendications précédentes.

7. Frein électromagnétique de véhicule selon la revendication 6, dans lequel le déplacement axial du piston de frein (112) est effectué par un dispositif à levier à genouillère (120) comprenant un bras plus long (D-B-C; 124) articulé aux deux côtés et disposé entre le piston de frein (112) et une douille à filetage interne (122), et un bras plus court (A-B; 126) articulé aux deux extrémités et agissant sur un point (B) du bras le plus long (D-B-C; 124).

8. Frein électromagnétique de véhicule selon la revendication 7, dans lequel une extrémité (C) du bras le plus long (D-B-C; 124) a une forme hémisphérique et est s'engrène dans un coussinet sphérique de forme correspondante du piston de frein (112), la seconde extrémité (D) du bras le plus long (D-B-C; 124) étant fendue pour former une fourchette et entoure partiellement la douille à filetage interne (122).

9. Frein électromagnétique de véhicule selon la revendication 8, dans lequel les deux bouts de l'extrémité en fourchette du bras le plus long (D-B-C; 124) sont articulés et reliés au moyen d'un raccord à tourillon (130; 132) à la douille à filetage interne (122).

10. Frein électromagnétique de véhicule selon la revendication 9, dans lequel la première extrémité (A) du bras le plus court (A-B; 126) est fendue pour former une fourchette et entoure la douille à filetage interne (122), les deux bouts de l'extrémité en fourchette (A) du bras le plus court (A-B; 126) ont une forme hémisphérique et prennent appui chacun dans un coussinet sphérique de forme correspondante dans le carter (140).

11. Frein électromagnétique de véhicule selon les revendications 7 à 10, dans lequel la douille à filetage interne contient une tige filetée (142) reliée de manière solidaire en rotation à l'arbre de sortie d'un moteur électrique (150) fixé au carter (140).
